# EUROPÄISCHE PATENTSCHRIFT

(11) **EP 3 271 224 B1**
(45) Veröffentlichungstag und Bekanntmachung des Hinweises auf die Patenterteilung: **17.04.2019**
(21) Anmeldenummer: 16702045.2
(22) Anmeldetag: 22.01.2016
(51) Int. Cl.: B60T 8/40

(54) **VERFAHREN ZUM BETREIBEN EINES REKUPERATIVEN BREMSSYSTEMS EINES FAHRZEUGS UND STEUERVORRICHTUNG FÜR EIN REKUPERATIVES BREMSSYSTEM EINES FAHRZEUGS**
METHOD FOR OPERATING A RECUPERATIVE BRAKE SYSTEM OF A VEHICLE AND CONTROL DEVICE FOR A RECUPERATIVE BRAKE SYSTEM OF A VEHICLE
PROCÉDÉ PERMETTANT DE FAIRE FONCTIONNER UN SYSTÈME DE FREINAGE À RÉCUPÉRATION D'UN VÉHICULE ET DISPOSITIF DE COMMANDE POUR UN SYSTÈME DE FREINAGE À RÉCUPÉRATION D'UN VÉHICULE

(30) Priorität: 18.03.2015 DE 102015204866
(43) Veröffentlichungstag der Anmeldung: 24.01.2018
(73) Patentinhaber: Robert Bosch GmbH, 70442 Stuttgart (DE)
(72) Erfinder: ELLWEIN, Rolf, 74343 Sachsenheim (DE); BAUER, Urs, 74343 Sachsenheim (DE); FOITZIK, Bertram, 74360 Ilsfeld (DE); BUSSMANN, Otmar, 74232 Abstatt (DE); KISTNER, Matthias, 74626 Bretzfeld (DE); KASTER, Robert, White Lake, MI 48386 (US)
(86) Internationale Anmeldenummer: PCT/EP2016/051276
(87) Internationale Veröffentlichungsnummer: WO 2016/146277

(56) Entgegenhaltungen:
- EP-A1- 2 418 132
- EP-A1- 2 463 165
- WO-A1-2013/092294
- WO-A1-2014/154435
- DE-A1- 10 325 266
- JP-A- 2005 329 740

## Beschreibung

Die Erfindung betrifft ein Verfahren zum Betreiben eines rekuperativen Bremssystems eines Fahrzeugs. Des Weiteren betrifft die Erfindung eine Steuervorrichtung für ein rekuperatives Bremssystem eines Fahrzeugs und ein rekuperatives Bremssystem für ein Fahrzeug.

### Stand der Technik

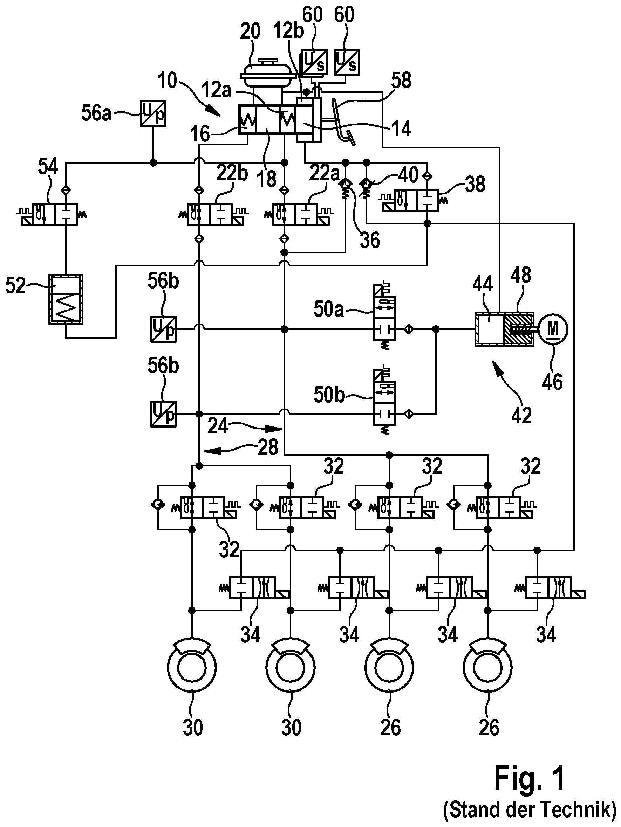

Fig. 1 zeigt eine schematische Darstellung eines herkömmlichen rekuperativen Bremssystems, welches der Anmelderin als interner Stand der Technik bekannt ist.

Das in Fig. 1 schematisch dargestellte rekuperative Bremssystem für ein Fahrzeug hat einen Hauptbremszylinder 10 mit einer ersten Druckkammer, welche als Einbremsvolumen ein erstes Teilvolumen 12a und ein zweites Teilvolumen 12b umfasst. Die Teilvolumen 12a und 12b sind mittels der zugeordneten Kolbenwände eines verstellbaren Stangenkolbens 14 reduzierbar. Außerdem hat der Hauptbremszylinder 10 noch eine zweite Druckkammer 16 und einen verstellbaren Schwimmkolben 18. Das erste Teilvolumen 12a, das zweite Teilvolumen 12b und die zweite Druckkammer 16 sind über jeweils eine Schnüffelbohrung an ein Bremsflüssigkeitsreservoir 20 angebunden.

Das rekuperative Bremssystem der Fig. 1 hat auch einen über ein erstes Trennventil 22a an dem ersten Teilvolumen 12a angebundenen ersten Bremskreis 24 mit ersten Radbremszylindern 26 und einen über ein zweites Trennventil 22b an die zweite Druckkammer 16 angebundenen zweiten Bremskreis 28 mit zweiten Radbremszylindern 30. Jedem Radbremszylinder 26 und 30 ist je ein Radeinlassventil 32 und je ein Radauslassventil 34 zugeordnet.

Außerdem ist das zweite Teilvolumen 12b über ein Rückschlagventil 36 an dem ersten Bremskreis 24 angebunden. Zusätzlich ist das zweite Teilvolumen 12b sowohl über ein elektrisch steuerbares Ventil 38 als auch über ein geregeltes Rückschlagventil 40 an das Bremsflüssigkeitsreservoir 20 angebunden.

Das herkömmliche rekuperative Bremssystem umfasst auch eine Kolben-Zylinder-Vorrichtung 42, deren Druckkammer 44 mittels eines durch einen Betrieb eines Motors 46 verstellbaren Kolbens 48 begrenzt wird. Die Druckkammer 44 der Kolben-Zylinder-Vorrichtung 42 ist über ein drittes Trennventil 50a mit dem ersten Bremskreis 24 und über ein viertes Trennventil 50b mit dem zweiten Bremskreis 28 verbunden. Außerdem ist die Druckkammer 44 der Kolben-Zylinder-Vorrichtung 42 an das Bremsflüssigkeitsreservoir 20 hydraulisch angebunden.

Des Weiteren umfasst das herkömmliche rekuperative Bremssystem eine Simulatoreinrichtung 52, welche über ein Simulatorventil 54 an dem ersten Teilvolumen 12a hydraulisch angebunden ist. An dem ersten Bremskreis 24 ist auch ein Vordrucksensor 56a so angebunden, dass der Vordrucksensor 56a dem Simulatorventil 54 vorgeschaltet ist. Je ein Bremsdrucksensor 56b ist an jedem Bremskreis 24 und 26 zusätzlich angebunden. Zur Ermittlung einer Betätigungsstärke einer Betätigung eines Bremsbetätigungselements 58 des rekuperativen Bremssystems durch einen Fahrer weist das rekuperative Bremssystem auch noch Bremsbetätigungssensoren 60 auf.

Das oben beschriebene Bremssystem ist zusätzlich noch mit mindestens einem (nicht skizzierten) generatorisch einsetzbaren Motor/Elektromotor ausgestattet. Durch ein Abbremsen des mit dem rekuperativen Bremssystem ausgestatteten Fahrzeugs mittels eines generatorischen Betriebs des generatorisch einsetzbaren Motors ist mindestens eine (nicht dargestellte) Batterie des Fahrzeugs aufladbar. Ein mittels des mindestens einen generatorisch einsetzbaren Motors zum Abbremsen des Fahrzeugs maximal ausübbares Kann-Generator-Bremsmoment variiert jedoch zeitlich. Beispielsweise liegt das maximal ausführbare Kann-Generator-Bremsmoment bei einer Geschwindigkeit des Fahrzeugs unter einer (zum Einsetzen des generatorisch einsetzbaren Motors notwendigen) Mindestgeschwindigkeit oder bei einer vollständigen Aufladung der mindestens einen aufladbaren Batterie bei (nahezu) Null. Bei einem Ansteuern des mindestens einen generatorisch einsetzbaren Motors wird deshalb in der Regel zusätzlich zu einer ersten Information bezüglich eines (z.B. durch Betätigung des Bremsbetätigungselements 58) angeforderten Soll-Gesamtbremsmoments noch eine zweite Information bezüglich des maximal ausführbaren Kann-Generator-Bremsmoments berücksichtigt. Nur sofern das Soll-Gesamtbremsmoment zumindest teilweise mittels des maximal ausführbaren Kann-Generator-Bremsmoments ausführbar ist, wird ein Generator-Bremsmoment kleiner oder gleich dem Soll-Gesamtbremsmoment und kleiner oder gleich dem maximal ausführbaren Kann-Generator-Bremsmoment mittels des mindestens einen generatorisch einsetzbaren Motors auf mindestens ein Rad und/oder mindestens eine Achse des Fahrzeugs ausgeübt.

Außerdem offenbaren die EP 2 418 132 A1 und die JP 2005 329740 A Bremsungen von Fahrzeugen, bei welchen während einer rekuperativen Phase Tests zur Überprüfung von Komponenten eines hydraulischen Bremssystems des jeweiligen Fahrzeugs ausgeführt werden. Auf diese Weise soll eine verlässliche Ausführbarkeit eines Übergangs von der rekuperativen Phase in eine hydraulische Phase der Bremsung sicherstellbar sein.

### Offenbarung der Erfindung

Die Erfindung schafft ein Verfahren zum Betreiben eines rekuperativen Bremssystems eines Fahrzeugs mit den Merkmalen des Anspruchs 1, eine Steuervorrichtung für ein rekuperatives Bremssystem eines Fahrzeugs mit den Merkmalen des Anspruchs 5 und ein rekuperatives Bremssystem für ein Fahrzeug mit den Merkmalen des Anspruchs 8.

### Vorteile der Erfindung

Die vorliegende Erfindung schafft Möglichkeiten zur Vorsteuerung von Volumen zur Kompensation zumindest des mindestens einen Lüftspiels oder sonstigen Bremseffekten, die zu einer erhöhten Volumenaufnahme des mindestens einen Radbremszylinders bei einem vergleichsweise großen Soll-Gesamtbremsmoment (über dem Schwellwert). Somit kann gezielt in solchen Situationen, in welchen ein plötzlicher Wegfall eines hohen Generator-Bremsmoments aufgrund des Übergangs des Bremssystems in die Rückfallebene zu befürchten ist, durch das Transferieren der Flüssigkeit in den mindestens einen Radbremszylinder dafür gesorgt werden, dass der Fahrer gegebenenfalls mit einem leicht aufbringbaren Fahrerbremspedalweg noch verlässlich einen zum Abbremsen seines Fahrzeugs ausreichenden Bremsdruck in dem mindestens einen Radbremszylinder bewirken kann. Die vorliegende Erfindung trägt somit zu einem verbesserten Bremskomfort für den Fahrer auch nach dem Übergang seines rekuperativen Bremssystems in die Rückfallebene bei. Gleichzeitig trägt die vorliegende Erfindung zur Steigerung eines Sicherheitsstandards eines rekuperativen Bremssystems bei.

Die vorliegende Erfindung ist vor allem für ein Bremssystem mit einem an seinem Hauptbremszylinder angebundenen Simulator vorteilhaft. Es wird jedoch darauf hingewiesen, dass die Ausführbarkeit/Nutzbarkeit der vorliegenden Erfindung nicht auf einen derartigen Bremssystemtyp limitiert ist.

Da die vorliegende Erfindung einem Fahrer mit einem rekuperativen Bremssystem einen verbesserten Bremskomfort und einen höheren Sicherheitsstandard seines rekuperativen Bremssystems schafft, trägt sie außerdem zur Steigerung einer Akzeptanz von rekuperativen Bremssystemen bei Fahrern bei. Damit erleichtert die vorliegende Erfindung Fahrern die Entscheidung zur Benutzung eines rekuperativen Bremssystems, welches ihnen ein Fahren ihres Fahrzeugs mit einem geringeren Kraftstoffverbrauch und einer niedrigeren Schadstoffemission ermöglicht.

In einer vorteilhaften Ausführungsform des Verfahrens wird ein Soll-Volumen der über den hydraulischen Steller in den mindestens einen Radbremszylinder transferierten Bremsflüssigkeit unter Berücksichtigung mindestens einer geschätzten und/oder ermittelten erhöhten Volumenaufnahme zumindest eines Teilbereichs einer Hydraulik des Bremssystems festgelegt. Insbesondere kann das Soll-Volumen so hoch festgelegt werden, dass zusätzlich zu dem Schließen des mindestens einen Lüftspiels des mindestens einen Radbremszylinders noch mindestens ein Bremsdruck in dem mindestens einen Radbremszylinder aufgebaut wird. Damit wird bereits zu Beginn eines plötzlichen Entfallens des Generator-Bremsmoments des mindestens einen generatorisch einsetzbaren Motors (z.B. aufgrund eines Bordnetzausfalls am Fahrzeug) ein Reib-Bremsmoment mittels des mindestens einen Radbremszylinders (welches von dem Bordnetzausfall nicht tangiert wird) zum Abbremsen des Fahrzeugs genutzt. Dies reduziert einen vom Fahrer zum Abbremsen seines Fahrzeugs noch aufzubringenden Bremspedalweg signifikant.

Beispielsweise kann das Soll-Volumen der über den hydraulischen Steller in den mindestens einen Radbremszylinder transferierten Bremsflüssigkeit unter Berücksichtigung mindestens einer geschätzten und/oder ermittelten Luftmenge in zumindest dem Teilbereich der Hydraulik des Bremssystems als der erhöhten Volumenaufnahme festgelegt werden. Bei einem Ausführen der hier beschriebenen Ausführungsform des Verfahrens kann somit vorteilhaft auf das Vorliegen von Luft in zumindest dem Teilbereich der Hydraulik des Bremssystems reagiert werden.

Alternativ oder ergänzend kann das Soll-Volumen der über den hydraulischen Steller in den mindestens einen Radbremszylinder transferierten Bremsflüssigkeit auch unter Berücksichtigung mindestens eines geschätzten und/oder ermittelten Reibwerts an mindestens einem Rad des Fahrzeugs festgelegt werden. Beispielsweise kann bei einem Fahren des Fahrzeugs mit einer großen Querbeschleunigung, welche zur Steigerung des Lüftspiels führt, auch ein höheres Lüftspiels an dem mindestens einen Radbremszylinder verlässlich geschlossen werden.

Die vorausgehend beschriebenen Vorteile sind auch bei einer entsprechend ausgebildeten Steuervorrichtung für ein rekuperatives Bremssystem eines Fahrzeugs gewährleistet. Es wird darauf hingewiesen, dass die Steuervorrichtung gemäß den oben beschriebenen Ausführungsformen des Verfahrens weiterbildbar ist.

Des Weiteren trägt auch ein rekuperatives Bremssystem für ein Fahrzeug mit einer derartigen Steuervorrichtung zur Sicherstellung der beschriebenen Vorteile bei.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung eines herkömmlichen rekuperativen Bremssystems;
- Fig. 2: ein Koordinatensystem zum Erläutern einer Ausführungsform des Verfahrens zum Betreiben eines rekuperativen Bremssystems eines Fahrzeugs; und
- Fig. 3: eine schematische Darstellung einer Ausführungsform der Steuervorrichtung.

### Ausführungsformen der Erfindung

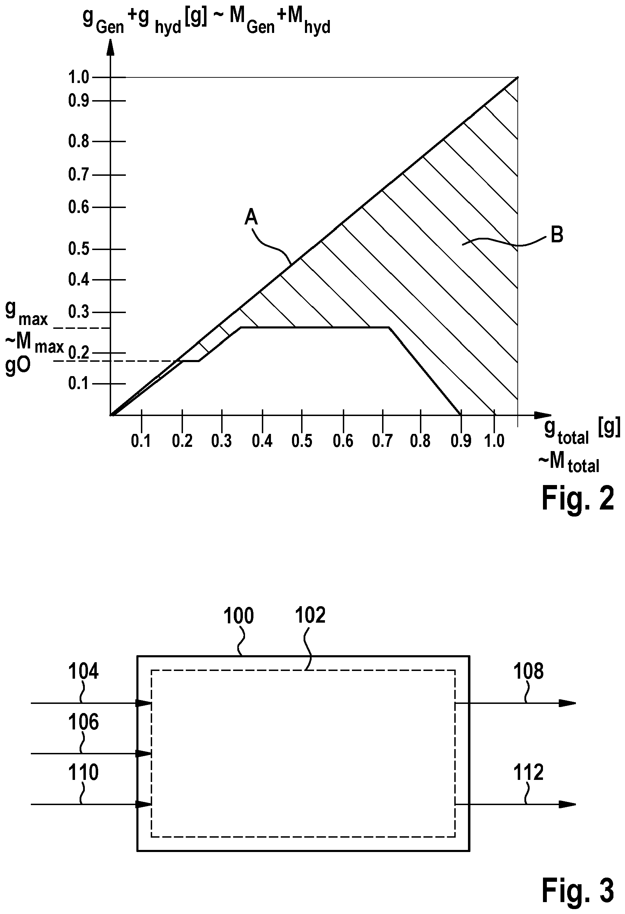

Fig. 2 zeigt ein Koordinatensystem zum Erläutern einer Ausführungsform des Verfahrens zum Betreiben eines rekuperativen Bremssystems eines Fahrzeugs.

Mittels des im Weiteren beschriebenen Verfahrens kann zum Beispiel das in der Fig. 1 schematisch dargestellte rekuperative Bremssystem betrieben werden. Es wird jedoch darauf hingewiesen, dass eine Ausführbarkeit des im Weiteren beschriebenen Verfahrens nicht auf einen bestimmten Bremssystemaufbau oder eine Ausstattung des jeweiligen rekuperativen Bremssystems mit den in Fig. 1 dargestellten Bremssystemkomponenten limitiert ist. Stattdessen ist das Verfahren bei einer Vielzahl verschiedener Bremssystemtypen ausführbar, welche mit mindestens einem generatorisch einsetzbaren Motor/Elektromotor, wie z.B. mit mindestens einem generatorisch einsetzbaren (elektrischen) Antriebsmotor, ausgestattet sind/zusammenwirken. Des Weiteren ist eine Ausführbarkeit des Verfahrens nicht auf einen bestimmten Fahrzeugtyp/Kraftfahrzeugtyp des mit dem rekuperativen Bremssystem ausgestatteten Fahrzeugs/Kraftfahrzeugs beschränkt.

Beim Ausführen des Verfahrens erfolgt ein Ansteuern des mindestens einen generatorisch einsetzbaren Motors des rekuperativen Bremssystems unter Berücksichtigung einer ersten Information gₜₒₜₐₗ bezüglich eines angeforderten Soll-Gesamtbremsmoments Mₜₒₜₐₗ und einer zweiten Information gₘₐₓ bezüglich eines mittels des mindestens einen generatorisch einsetzbaren Motors maximal ausführbaren Kann-Generator-Bremsmoment Mₘₐₓ. Das Soll-Gesamtbremsmoment Mₜₒₜₐₗ kann z.B. von einem Fahrer des Fahrzeugs (mittels einer Betätigung seines Bremsbetätigungselements/Bremspedals) angefordert sein. Die erste Information gₜₒₜₐₗ kann in diesem Fall von mindestens einem Bremsbetätigungssensor, wie insbesondere von einem Fahrerbremskraftsensor, einem Pedalwegsensor und/oder einen Stangenwegsensor, ausgegeben werden. Ebenso kann das Soll-Gesamtbremsmoment Mₜₒₜₐₗ auch von einer Geschwindigkeitssteuerautomatik des Fahrzeugs, wie beispielsweise einem Abstandsregeltempomat (ACC-System) oder einem Notbremssystem, angefordert sein. Das hier beschriebene Verfahren kann somit auch zum Ausführen einer von der Geschwindigkeitssteuerautomatik (ohne eine Betätigung des Bremsbetätigungselements durch den Fahrer) angeforderten autonomen Bremsung oder automatischen Notbremsung genutzt werden. Als erste Information gₜₒₜₐₗ können z.B. das Soll-Gesamtbremsmoments Mₜₒₜₐₗ und/oder eine Soll-Verzögerung gₜₒₜₐₗ des abzubremsenden Fahrzeugs beim Ansteuern des mindestens einen generatorisch einsetzbaren Motors berücksichtigt werden. Ebenso kann die erste Information gₜₒₜₐₗ jedoch auch mindestens eine andere Größe, welche dem Soll-Gesamtbremsmoment Mₜₒₜₐₗ oder der Soll-Verzögerung gₜₒₜₐₗ entspricht, umfassen/sein.

In der Ausführungsform der Fig. 2 ist die zweite Information gₘₐₓ beispielhaft eine (ausschließlich) mittels des mindestens einen generatorisch einsetzbaren Motors (ohne einen Radbremszylinder des rekuperativen Bremssystems) maximal bewirkbare rekuperative Verzögerung gₘₐₓ. Alternativ können jedoch auch das maximal ausführbare Kann-Generator-Bremsmoment Mₘₐₓ, eine aktuelle Fahrzeuggeschwindigkeit des abzubremsenden Fahrzeugs und/oder ein Ladezustand mindestens einer mittels des mindestens einen generatorisch einsetzbaren Motors aufladbaren Batterie als die zweite Information gₘₐₓ beim Ansteuern des mindestens einen generatorisch einsetzbaren Motors berücksichtigt werden. Auf diese Weise ist insbesondere mitberücksichtigbar, dass das maximal ausführbare Kann-Generator-Bremsmoment Mₘₐₓ (bzw. die maximal bewirkbare rekuperative Verzögerung gₘₐₓ) bei einer vollständigen Aufladung der mindestens einen aufladbaren Batterie oder bei einer aktuelle Fahrzeuggeschwindigkeit unter einer zum Betreiben des mindestens einen generatorisch einsetzbaren Motors notwendigen Mindestgeschwindigkeit (nahezu) gleich Null wird. Alternativ oder Ergänzend kann jedoch die zweite Information gₘₐₓ auch mindestens eine andere dem maximal ausführbare Kann-Generator-Bremsmoment Mₘₐₓ (bzw. der maximal bewirkbaren rekuperativen Verzögerung gₘₐₓ) entsprechende Größe umfassen.

Bei dem Koordinatensystem der Fig. 2 gibt die Abszisse die Soll-Verzögerung gₜₒₜₐₗ (in g/Erdbeschleunigung) an. Mittels der Ordinate des Koordinatensystems der Fig. 2 ist eine Summe g_{Gen}+ g_{hyd} aus einer (mittels des mindestens einen generatorisch einsetzbaren Motors tatsächlich bewirkten) rekuperative Verzögerung g_{Gen} und einer mittels mindestens eines Radbremszylinders des rekuperativen Bremssystems ausgeübten hydraulische Verzögerung g_{hyd} (in g/Erdbeschleunigung) angegeben.

Der mindestens eine generatorisch einsetzbare Motor wird derart angesteuert, dass, sofern das Soll-Gesamtbremsmoment Mₜₒₜₐₗ zumindest teilweise mittels des maximal ausführbaren Kann-Generator-Bremsmoments Mₘₐₓ ausführbar ist, ein Generator-Bremsmoment M_{Gen} kleiner oder gleich dem Soll-Gesamtbremsmoment Mₜₒₜₐₗ und kleiner oder gleich dem maximal ausführbaren Kann-Generator-Bremsmoment Mₘₐₓ mittels des mindestens einen generatorisch einsetzbaren Motors auf mindestens ein Rad und/oder mindestens eine Achse des Fahrzeugs ausgeübt wird. Allerdings wird bei dem Verfahren der Fig. 2 vor dem Ansteuern des mindestens einen generatorisch einsetzbaren Motors ermittelt, ob das Soll-Gesamtbremsmoment Mₜₒₜₐₗ, bzw. die dem Soll-Gesamtbremsmoment Mₜₒₜₐₗ entsprechende Größe der ersten Information gₜₒₜₐₗ, über einem fest vorgegebenen oder festlegbaren Grenzwert g0 liegt. Beispielsweise wird in der Ausführungsform der Fig. 2 untersucht, ob die Soll-Verzögerung gₜₒₜₐₗ über einer Grenzverzögerung g0 als dem Grenzwert g0 liegt.

Sofern das Soll-Gesamtbremsmoment Mₜₒₜₐₗ, bzw. die dem Soll-Gesamtbremsmoment Mₜₒₜₐₗ entsprechende Größe der ersten Information gₜₒₜₐₗ, über dem fest vorgegebenen oder festlegbaren Grenzwert g0 liegt, wird, selbst wenn das Soll-Gesamtbremsmoment Mₜₒₜₐₗ kleiner oder gleich dem maximal ausführbaren Kann-Generator-Bremsmoment Mₘₐₓ ist, über mindestens einen hydraulischen Steller zumindest so viel Bremsflüssigkeit in mindestens einen Radbremszylinder des rekuperativen Bremssystems transferiert, dass zumindest ein Lüftspiel des jeweiligen Radbremszylinders geschlossen wird. Wenn bei einem Soll-Gesamtbremsmoments Mₜₒₜₐₗ (bzw. der entsprechenden Größe der ersten Information gₜₒₜₐₗ) über dem Grenzwert g0 der mindestens eine generatorisch einsetzbare Motor ausfällt/wegfällt, ist deshalb zumindest das Lüftspiel des mindestens einen Radbremszylinders bereits geschlossen. Der Fahrer kann somit mittels seiner Fahrerbremskraft sofort eine (weitere) Steigerung mindestens eines Bremsdrucks in dem mindestens einen Radbremszylinder bewirken, ohne dass er zuvor eine zum Schließen des mindestens einen Lüftspiels ausreichende Volumenverschiebung in den mindestens einen Radbremszylinder bewirken muss. Durch das zuvorige Schließen des mindestens einen Lüftspiels des mindestens einen Radbremszylinders mittels des mindestens einen hydraulischen Stellers wird ein Zeitintervall zwischen dem Ausfallen/Wegfallen des mindestens einen generatorisch einsetzbaren Motors und einem Beginn der (weiteren) Steigerung des mindestens einen Bremsdrucks in dem mindestens einen Radbremszylinder verkürzt. Außerdem entfällt für den Fahrer ein zum Bewirken der zum Schließen des mindestens einen Lüftspiels ausreichenden Volumenverschiebung notwendiger Arbeitsaufwand. Das hier beschriebene Verfahren schafft damit für den Fahrer auch nach dem Ausfallen/Wegfallen des mindestens einen generatorisch einsetzbaren Motors einen guten Bremskomfort.

Ein plötzliches Ausfallen/Wegfallen des mindestens einen generatorisch einsetzbaren Motors erfolgt z.B. bei einem Bordnetzausfall am abzubremsenden/abgebremsten Fahrzeug. Man spricht in einer derartigen Situation auch von einem Übergang des rekuperativen Bremssystems in seine Rückfallebene. In einer derartigen Situation entfällt das Generator-Bremsmoment M_{Gen} des mindestens einen generatorisch einsetzbaren Motors (nahezu) sofort. Aufgrund der beim Ausführen des hier beschriebenen Verfahrens realisierten schnellen und leichteren Kompensierbarkeit des entfallenden Generator-Bremsmoments M_{Gen} bleibt jedoch auch nach dem Übergang des rekuperativen Bremssystems in seine Rückfallebene ein guter Sicherheitsstandard weiterhin gewährleistet.

Vorteilhafter Weise erfolgt das (vorsorgliche) Schließen des mindestens einen Lüftspiels immer, sobald das Soll-Gesamtbremsmoments Mₜₒₜₐₗ (bzw. die entsprechende Größe der ersten Information gₜₒₜₐₗ) den Grenzwert g0 überschreitet. Damit ist vor Allem bei einem starken Abbremsen des Fahrzeugs ein guter Übergang des rekuperativen Bremssystems in seine Rückfallebene ermöglicht.

In der Ausführungsform der Fig. 2 wird, solange das Soll-Gesamtbremsmoments Mₜₒₜₐₗ (bzw. die entsprechende Größe der ersten Information gₜₒₜₐₗ) unter dem Grenzwert g0 liegt (und kleiner oder gleich dem maximal ausführbaren Kann-Generator-Bremsmoment Mₘₐₓ ist), das angeforderte Soll-Gesamtbremsmoments Mₜₒₜₐₗ (bzw. die entsprechende Größe der ersten Information gₜₒₜₐₗ) rein rekuperativ erfüllt (siehe Kurve A). Solange das Soll-Gesamtbremsmoments Mₜₒₜₐₗ (bzw. die entsprechenden Größe der ersten Information gₜₒₜₐₗ) unter dem Grenzwert g0 liegt, wird deshalb (bei einem angeforderten Soll-Gesamtbremsmoments Mₜₒₜₐₗ kleiner oder gleich dem maximal ausführbaren Kann-Generator-Bremsmoment Mₘₐₓ) mittels des mindestens einen generatorisch einsetzbaren Motors ein Generator-Bremsmoment M_{Gen} gleich dem Soll-Gesamtbremsmoments Mₜₒₜₐₗ auf das mindestens eine Rad und/oder die mindestens eine Achse des abzubremsenden Fahrzeugs ausgeübt. Vorzugsweise bleibt bei einem Soll-Gesamtbremsmoments Mₜₒₜₐₗ (bzw. der entsprechenden Größe der ersten Information gₜₒₜₐₗ) unter dem Grenzwert g0 ein hydraulisches Bremsmoment M_{hyd} des mindestens einen Radbremszylinders des rekuperativen Bremssystems (nahezu) gleich Null. In der Ausführungsform der Fig. 2 wird dazu mittels des mindestens einen generatorisch einsetzbaren Motors eine rekuperative Verzögerung g_{Gen} gleich der Soll-Verzögerung gₜₒₜₐₗ auf das mindestens eine Rad und/oder die mindestens eine Achse des abzubremsenden Fahrzeugs ausgeübt, während die mittels des mindestens einen Radbremszylinders des rekuperativen Bremssystems ausgeübte hydraulische Verzögerung g_{hyd} (nahezu) gleich Null bleibt. (Die hydraulische Verzögerung g_{hyd} ist in Fig. 2 mittels der Fläche B wiedergegeben.)

Mittels des mindestens einen hydraulischen Stellers wird außerdem bei einem Soll-Gesamtbremsmoments Mₜₒₜₐₗ (bzw. der entsprechenden Größe der ersten Information gₜₒₜₐₗ) gleich/über dem Grenzwert g0 so viel Bremsflüssigkeit in den mindestens einen Radbremszylinder des rekuperativen Bremssystems transferiert, dass ein hydraulisches Bremsmoment M_{hyd} ungleich Null (bzw. eine hydraulische Verzögerung g_{hyd} ungleich Null) des mindestens einen Radbremszylinders aufgebaut wird, wobei das Generator-Bremsmoment M_{Gen} (bzw. die rekuperative Verzögerung g_{Gen}) so eingestellt wird, dass eine Summe aus dem hydraulisches Bremsmoment M_{hyd} und dem Generator-Bremsmoment M_{Gen} dem Soll-Gesamtbremsmoments Mₜₒₜₐₗ entspricht (bzw. eine Summe aus der hydraulischen Verzögerung g_{hyd} und der rekuperativen Verzögerung g_{Gen} der Soll-Verzögerung gₜₒₜₐₗ entspricht). Dies ist mittels der Kurve A in Fig. 2 gezeigt. Mittels des Vergleichens des Soll-Gesamtbremsmoments Mₜₒₜₐₗ (bzw. der entsprechenden Größe der ersten Information gₜₒₜₐₗ) mit dem Grenzwert g0 ist ein Bremsen des Fahrers genau an der Verblendbremse erkennbar. Somit kann in einer derartigen Situation gezielt bereits mit dem Aufbau eines (vergleichsweise geringen) Bremsdrucks in dem mindestens einen Radbremszylinder begonnen werden, wodurch auf einen Ausfall des mindestens einen generatorisch einsetzbaren Motors vorteilhafter reagiert werden kann.

In einer vorteilhaften Weiterbildung kann ein Soll-Volumen (als Vorsteuervolumen) der über den mindestens einen hydraulischen Steller in dem mindestens einen Radbremszylinder transferierten Bremsflüssigkeit (bzw. das hydraulische Bremsmoment M_{hyd} oder die hydraulische Verzögerung g_{hyd}) unter Berücksichtigung mindestens einer geschätzten und/oder ermittelten erhöhten Volumenaufnahme zumindest eines Teilbereichs einer Hydraulik des rekuperativen Bremssystems festgelegt werden. Beispielsweise kann mindestens eine geschätzte und/oder ermittelte Luftmenge in zumindest dem Teilbereich der Hydraulik des rekuperativen Bremssystems beim Festlegen des Soll-Volumens (bzw. des hydraulischen Bremsmoments M_{hyd} oder der hydraulischen Verzögerung g_{hyd}) berücksichtigt werden. Als Alternative oder als Ergänzung dazu kann das Soll-Volumen (bzw. das hydraulische Bremsmoment M_{hyd} oder die hydraulische Verzögerung g_{hyd}) auch unter Berücksichtigung mindestens eines geschätzten und/oder ermittelten Reibwerts an mindestens einem Rad des Fahrzeugs festgelegt werden. Außerdem ist auch eine Erhöhung des Soll-Volumens (als Vorsteuervolumen) auf Basis einer Null-Volumenschätzung möglich. Anschließend wird der mindestens eine hydraulische Steller so angesteuert/betrieben, dass ein dem Soll-Volumen (bzw. dem hydraulischen Bremsmoment M_{hyd} oder der hydraulischen Verzögerung g_{hyd}) entsprechendes Ist-Volumen über den mindestens einen hydraulischen Steller in den mindestens einen Radbremszylinder transferiert wird.

Als der mindestens eine hydraulische Steller kann beispielsweise eine Kolben-Zylinder-Vorrichtung (Plungervorrichtung) eingesetzt werden, deren Druckkammer mittels eines durch einen Betrieb eines Motors verstellbaren Kolbens begrenzt wird. Der Kolben der Kolben-Zylinder-Vorrichtung kann insbesondere mittels des Betriebs des Motors linear verstellbar sein (siehe Fig. 1). Als Alternative oder als Ergänzung zu der hier beschriebenen Kolben-Zylinder-Vorrichtung kann jedoch auch mindestens eine Pumpe als der mindestens eine hydraulische Steller genutzt werden. Somit können zum Ausführen des hier beschriebenen Verfahrens herkömmlicherweise an dem rekuperativen Bremssystem bereits verbaute Bremssystemkomponenten benutzt werden. Eine Erweiterung des rekuperativen Bremssystems mit zusätzlichen Bremssystemkomponenten ist zum Ausführen des hier beschriebenen Verfahrens deshalb nicht notwendig. Das Verfahren kann somit zum Betreiben jedes rekuperativen Bremssystems genutzt werden, ohne dass dessen Bauraumbedarf oder dessen Herstellungskosten gesteigert werden.

Es wird darauf hingewiesen, dass das mittels des hier beschriebenen Verfahrens betriebene rekuperative Bremssystem auch einen Hauptbremszylinder mit einem relativ geringen Hauptbremszylinderdurchmesser haben kann, obwohl ein derartiger Hauptbremszylinder aufgrund seines reduzierten Hauptbremszylinderdurchmessers nur über eine reduzierte Volumenreserve in der Rückfallebene verfügt. Aufgrund der vorteilhaften Nutzung des mindestens einen hydraulischen Stellers zumindest zum

Schließen des mindestens einen Lüftspiels kann trotz der reduzierten Volumenreserve des Hauptbremszylinders in der Rückfallebene noch mindestens ein ausreichend hoher Bremsdruck in dem mindestens einen Radbremszylinder bewirkt werden. Das angenehme Bremsbetätigungsgefühl (Pedalgefühl) für den in den Hauptbremszylinder mit dem relativ geringen Hauptbremszylinderdurchmesser einbremsenden Fahrer kann damit für das mittels des hier beschriebenen Verfahrens betriebene rekuperative Bremssystem nachteillos genutzt werden.

In einer vorteilhaften Weiterbildung des Bremssystems kann der Schwellwert g0 auch unter Berücksichtigung von der in dem Bremssystem vorliegenden Luftmenge oder einem Reibwert an dem mindestens einen Radbremszylinder festgelegt werden.

Das hier beschriebene Verfahren schafft insbesondere eine Absicherfunktion für einen Übergang in die Rückfallebene. Bereits während eines Herunterfahrens des Systems kann durch ein Verschieben von Bremsflüssigkeit in den mindestens einen Radbremszylinder (mittels des mindestens einen hydraulischen Stellers) der mindestens eine Radbremszylinder vorbefüllt und ein (geringer) Bremsdruck in diesem eingestellt werden. Deshalb liegt bei einem Einbremsen des Fahrers in sein in der Rückfallebene vorliegendes rekuperatives Bremssystem bereits bei einer relativ geringen Fahrerbremskraft schon ein vergleichsweise hohes Bremsflüssigkeitsvolumen in dem mindestens einen Radbremszylinder vor.

Fig. 3 zeigt eine schematische Darstellung einer Ausführungsform der Steuervorrichtung.

Die in Fig. 3 schematisch dargestellte Steuervorrichtung 100 kann zum Beispiel in dem in der Fig. 1 schematisch dargestellten rekuperativen Bremssystem eingesetzt werden. Es wird jedoch darauf hingewiesen, dass eine Verwendbarkeit der Steuervorrichtung 100 weder auf diesen Bremssystemtyp noch auf einen bestimmten Fahrzeugtyp/Kraftfahrzeugtyp des mit dem rekuperativen Bremssystem ausgestatteten Fahrzeugs/Kraftfahrzeugs beschränkt ist.

Die Steuervorrichtung 100 hat eine Ansteuereinrichtung 102, welche dazu ausgelegt ist, zumindest ein Bremsvorgabe-Signal 104 bezüglich eines von einem Fahrer oder einer

Geschwindigkeitssteuerautomatik des Fahrzeugs angeforderten Soll-Gesamtbremsmoments Mₜₒₜₐₗ und ein Information-Signal 106 bezüglich eines mittels mindestens eines generatorisch einsetzbaren Motors des rekuperativen Bremssystems maximal ausführbaren Kann-Generator-Bremsmoments Mₘₐₓ zu empfangen. Außerdem ist die Ansteuereinrichtung 102 dazu ausgelegt, unter Berücksichtigung zumindest des Bremsvorgabe-Signals 104 und des Information-Signals 106 den mindestens einen generatorisch einsetzbaren Motor mittels mindestens eines Steuersignals 108 anzusteuern. Dies geschieht derart, dass, sofern das Soll-Gesamtbremsmoment Mₜₒₜₐₗ zumindest teilweise mittels des maximal ausführbaren Kann-Generator-Bremsmoments Mₘₐₓ ausführbar ist, ein Generator-Bremsmoment M_{Gen} kleiner oder gleich dem Soll-Gesamtbremsmoment Mₜₒₜₐₗ und kleiner oder gleich dem maximal ausführbaren Kann-Generator-Bremsmoment Mₘₐₓ mittels des mindestens einen generatorisch einsetzbaren Motors auf mindestens ein Rad und/oder mindestens eine Achse des Fahrzeugs ausübbar ist/ausgeübt wird.

In der Ausführungsform der Fig. 3 ist die Ansteuereinrichtung 102 außerdem dazu ausgelegt, mindestens eine Warninformation 110 bezüglich eines möglicherweise bevorstehenden oder erfolgten Übergangs in eine Rückfallebene des rekuperativen Bremssystems zu empfangen.

In einer vorteilhaften Weiterbildung kann die Ansteuereinrichtung 102 zusätzlich dazu ausgelegt sein, eine Soll-Volumen-Größe bezüglich eines Soll-Volumens der über den mindestens einen hydraulischen Steller in den mindestens einen Radbremszylinder zu transferierenden Bremsflüssigkeit unter Berücksichtigung mindestens einer geschätzten und/oder ermittelten erhöhten Volumenaufnahme zumindest eines Teilbereichs einer Hydraulik des Bremssystems festzulegen. Ebenso kann die Ansteuereinrichtung 102 dazu ausgelegt sein, die Soll-Volumen-Größe unter Berücksichtigung mindestens eines geschätzten und/oder ermittelten Reibwerts an mindestens einem Rad des Fahrzeugs festzulegen. In einer alternativen Ausführungsform kann die Ansteuereinrichtung 102 das Soll-Gesamtbremsmoment Mₜₒₜₐₗ, bzw. eine entsprechende Größe des Bremsvorgabe-Signals 104, auch mit einem fest vorgegebenen oder festlegbaren Schwellwert g0 vergleichen. Sofern das Soll-Gesamtbremsmoment Mₜₒₜₐₗ über dem Schwellwert g0 liegt, ist die

Ansteuereinrichtung 102 in diesem Fall dazu ausgelegt, selbst wenn das Soll-Gesamtbremsmoment Mₜₒₜₐₗ kleiner oder gleich dem maximal ausführbaren Kann-Generator-Bremsmoment Mₘₐₓ ist, den mindestens einen hydraulischen Steller des rekuperativen Bremssystems (mittels mindestens eines Steller-Steuersignals 112) so anzusteuern, dass über den mindestens einen hydraulischen Steller zumindest so viel Bremsflüssigkeit in mindestens einen Radbremszylinder des rekuperativen Bremssystems transferierbar ist, dass zumindest ein Lüftspiel des jeweiligen Radbremszylinders geschlossen wird. Somit kann auch das Verfahren der Fig. 2 mittels der Steuervorrichtung 100 ausführbar sein.

Die Steuervorrichtung 100 kann somit alle oben schon beschriebenen Vorteile schaffen. Auch ein rekuperatives Bremssystem für ein Fahrzeug mit der Steuervorrichtung 100 realisiert die beschriebenen Vorteile. Das rekuperative Bremssystem kann zumindest einige der in Fig. 1 dargestellten Bremssystemkomponenten umfassen. Es wird jedoch darauf hingewiesen, dass die Bremssystemkomponenten der Fig. 1 für die Ausbildbarkeit des rekuperativen Bremssystems mit der Steuervorrichtung 100 nur beispielhaft zu interpretieren sind.

## Patentansprüche

1. Verfahren zum Betreiben eines rekuperativen Bremssystems eines Fahrzeugs mit den Schritten:
Ansteuern mindestens eines generatorisch einsetzbaren Motors des rekuperativen Bremssystems unter Berücksichtigung einer ersten Information (gₜₒₜₐₗ) bezüglich eines von einem Fahrer oder einer Geschwindigkeitssteuerautomatik des Fahrzeugs angeforderten Soll-Gesamtbremsmoments (Mₜₒₜₐₗ) und einer zweiten Information (gₘₐₓ) bezüglich eines mittels des mindestens einen generatorisch einsetzbaren Motors maximal ausführbaren Kann-Generator-Bremsmoments (Mₘₐₓ) derart, dass, sofern das Soll-Gesamtbremsmoment (Mₜₒₜₐₗ) zumindest teilweise mittels des maximal ausführbaren Kann-Generator-Bremsmoments (Mₘₐₓ) ausführbar ist, ein Generator-Bremsmoment (M_{Gen}) kleiner oder gleich dem Soll-Gesamtbremsmoment (Mₜₒₜₐₗ) und kleiner oder gleich dem maximal ausführbaren Kann-Generator-Bremsmoment (Mₘₐₓ) mittels des mindestens einen generatorisch einsetzbaren Motors auf mindestens ein Rad und/oder mindestens eine Achse des Fahrzeugs ausgeübt wird;
**dadurch gekennzeichnet, dass**
zumindest sofern das Soll-Gesamtbremsmoment (Mₜₒₜₐₗ) über einem fest vorgegebenen oder festlegbaren Schellwert (g0) liegt, selbst wenn das Soll-Gesamtbremsmoment (Mₜₒₜₐₗ) kleiner oder gleich dem maximal ausführbaren Kann-Generator-Bremsmoment (Mₘₐₓ) ist, über mindestens einen hydraulischen Steller (42) zumindest so viel Bremsflüssigkeit in mindestens einen Radbremszylinder (26,30) des rekuperativen Bremssystems transferiert wird, dass zumindest ein Lüftspiel des jeweiligen Radbremszylinders geschlossen wird.

2. Verfahren nach Anspruch 1, wobei ein Soll-Volumen der über den mindestens einen hydraulischen Steller in den mindestens einen Radbremszylinder transferierten Bremsflüssigkeit unter Berücksichtigung mindestens einer geschätzten und/oder ermittelten erhöhten Volumenaufnahme zumindest eines Teilbereichs einer Hydraulik des Bremssystems festgelegt wird.

3. Verfahren nach Anspruch 2, wobei das Soll-Volumen der über den mindestens einen hydraulischen Steller in den mindestens einen Radbremszylinder transferierten Bremsflüssigkeit unter Berücksichtigung mindestens einer geschätzten und/oder ermittelten Luftmenge in zumindest dem Teilbereichs der Hydraulik des Bremssystems als der erhöhten Volumenaufnahme festgelegt wird.

4. Verfahren nach Anspruch 1 oder 2, wobei das Soll-Volumen der über den mindestens einen hydraulischen Steller in den mindestens einen Radbremszylinder transferierten Bremsflüssigkeit unter Berücksichtigung mindestens eines geschätzten und/oder ermittelten Reibwerts an mindestens einem Rad des Fahrzeugs festgelegt wird.

5. Steuervorrichtung (100) für ein rekuperatives Bremssystem eines Fahrzeugs mit:
einer Ansteuereinrichtung (102), welche dazu ausgelegt ist, unter Berücksichtigung von mindestens einem bereitgestellten Bremsvorgabe-Signal (104) bezüglich eines von einem Fahrer oder einer Geschwindigkeitssteuerautomatik des Fahrzeugs angeforderten Soll-Gesamtbremsmoments (Mₜₒₜₐₗ) und mindestens eines bereitgestellten Information-Signals (106) bezüglich eines mittels mindestens eines generatorisch einsetzbaren Motors des rekuperativen Bremssystems maximal ausführbaren Kann-Generator-Bremsmoments (Mₘₐₓ) den mindestens einen generatorisch einsetzbaren Motor so anzusteuern, dass, sofern das Soll-Gesamtbremsmoment (Mₜₒₜₐₗ) zumindest teilweise mittels des maximal ausführbaren Kann-Generator-Bremsmoments (Mₘₐₓ) ausführbar ist, ein Generator-Bremsmoment (M_{Gen}) kleiner oder gleich dem Soll-Gesamtbremsmoment (Mₜₒₜₐₗ) und kleiner oder gleich dem maximal ausführbaren Kann-Generator-Bremsmoment (Mₘₐₓ) mittels des mindestens einen generatorisch einsetzbaren Motors auf mindestens ein Rad und/oder mindestens eine Achse des Fahrzeugs ausübbar ist;
**dadurch gekennzeichnet, dass**
zumindest sofern das Soll-Gesamtbremsmoment (Mₜₒₜₐₗ) über einem fest vorgegebenen oder festlegbaren Schwellwert (g0) liegt, die Ansteuereinrichtung (102) zusätzlich dazu ausgelegt ist, selbst wenn das Soll-Gesamtbremsmoment (Mₜₒₜₐₗ) kleiner oder gleich dem maximal ausführbaren Kann-Generator-Bremsmoment (Mₘₐₓ) ist, mindestens einen hydraulischen Steller (42) des rekuperativen Bremssystems so anzusteuern, dass über den mindestens einen hydraulischen Steller zumindest so viel Bremsflüssigkeit in mindestens einen Radbremszylinder (26,30) des rekuperativen Bremssystems transferierbar ist, dass zumindest ein Lüftspiel des jeweiligen Radbremszylinders geschlossen wird.

6. Steuervorrichtung (100) nach Anspruch 5, wobei die Ansteuereinrichtung (102) zusätzlich dazu ausgelegt ist, eine Soll-Volumen-Größe bezüglich eines Soll-Volumens der über den mindestens einen hydraulischen Steller in den mindestens einen Radbremszylinder zu transferierenden Bremsflüssigkeit unter Berücksichtigung mindestens einer geschätzten und/oder ermittelten erhöhten Volumenaufnahme zumindest eines Teilbereichs einer Hydraulik des Bremssystems festzulegen.

7. Steuervorrichtung (100) nach Anspruch 5 oder 6, wobei die Ansteuereinrichtung (102) zusätzlich dazu ausgelegt ist, die Soll-Volumen-Größe unter Berücksichtigung mindestens eines geschätzten und/oder ermittelten Reibwerts an mindestens einem Rad des Fahrzeugs festzulegen.

8. Rekuperatives Bremssystem für ein Fahrzeug, mit einer Steuervorrichtung (100) nach einem der Ansprüche 5 bis 7.

## Claims

1. Method for operating a recuperative brake system of a vehicle, having the steps:
Actuating at least one motor, which can be used as a generator, of the recuperative brake system taking into account first information (gtotai) relating to a setpoint total braking torque (Mₜₒₜₐₗ) which is requested by a driver or a speed control automatic mechanism of the vehicle, and second information (gₘₐₓ) relating to a maximum executable possible generator braking torque (Mₘₐₓ) by means of the at least one motor which can be used as a generator, in such a way that, in so far as the setpoint total braking torque (Mₜₒₜₐₗ) can be executed at least partially by means of the maximum executable possible generator braking torque (Mₘₐₓ), a generator braking torque (M_{Gen}) which is less than or equal to the setpoint total braking torque (Mₜₒₜₐₗ) and less than or equal to the maximum executable possible generator braking torque (Mₘₐₓ) is applied to at least one wheel and/or at least one axle of the vehicle by means of the at least one motor which can be used as a generator;
**characterized in that**
even if the setpoint total braking torque (Mₜₒₜₐₗ) is less than or equal to the maximum executable possible generator braking torque (Mₘₐₓ), at least if the setpoint total braking torque (Mₜₒₜₐₗ) is above a permanently predefined or predefineable threshold value (g0), at least so much brake fluid is transferred into at least one wheel brake cylinder (26, 30) of the recuperative brake system via at least one hydraulic actuator (42) that at least one clearance of the respective wheel brake cylinder is closed.

2. Method according to Claim 1, wherein the setpoint volume of the brake fluid which is transferred into the at least one wheel brake cylinder via the at least one hydraulic actuator is defined taking into account at least one estimated and/or determined increased volume capacity of at least a partial region of a hydraulic component of the brake system.

3. Method according to Claim 2, wherein the setpoint volume of the brake fluid which is transferred into the at least one wheel brake cylinder via the at least one hydraulic actuator is defined as the increased volume capacity taking into account at least one estimated and/or determined air quantity in at least one partial region of the hydraulic component of the brake system.

4. Method according to Claim 1 or 2, wherein the setpoint volume of the brake fluid which is transferred into the at least one wheel brake cylinder via the at least one hydraulic actuator is defined taking into account at least one estimated and/or determined coefficient of friction at at least one wheel of the vehicle.

5. Control device (100) for a recuperative brake system of a vehicle, having:
An actuation apparatus (102) which is configured to actuate the at least one motor which can be used as a generator, taking into account at least one supplied braking predefinition signal (104) relating to a setpoint total braking torque (Mₜₒₜₐₗ) which is requested by a driver or an automatic speed control device of the vehicle and at least one supplied information signal (106) relating to a possible generator braking torque (Mₘₐₓ) which is the maximum which can be executed by means of at least one motor, which can be used as a generator,
of the recuperative brake system, in such a way that if the setpoint total braking torque (Mₜₒₜₐₗ) can be executed at least partially by means of the maximum executable possible generator braking torque (Mₘₐₓ), a generator braking torque (M_{Gen}) which is less than or equal to the setpoint total braking torque (Mₜₒₜₐₗ) and less than or equal to the maximum executable possible generator braking torque (Mₘₐₓ) can be applied to at least one wheel and/or at least one axle of the vehicle by means of the at least one motor which can be used as a generator,
**characterized in that**
at least if the setpoint total braking torque (Mₜₒₜₐₗ) is above a permanently predefined or predefineable threshold value (g0), the actuation apparatus (102) is additionally configured, even if the setpoint total braking torque (Mₜₒₜₐₗ) is less than or equal to the maximum executable possible generator braking torque (Mₘₐₓ), to actuate at least one hydraulic actuator (42) of the recuperative brake system in such a way that at least so much brake fluid can be transferred into at least one wheel brake cylinder (26, 30) of the recuperative brake system via the at least one hydraulic actuator that at least one clearance of the respective wheel brake cylinder is closed.

6. Control device (100) according to Claim 5, wherein the actuation apparatus (102) is additionally configured to define a setpoint volume variable relating to a setpoint volume of the brake fluid, to be transferred into the at least one wheel brake cylinder via the at least one hydraulic actuator, taking into account at least one estimated and/or determined increased volume capacity of at least one partial region of a hydraulic component of the brake system.

7. Control device (100) according to Claim 5 or 6, wherein the actuation apparatus (102) is additionally configured to define the setpoint volume variable taking into account at least one estimated and/or determined coefficient of friction at at least one wheel of the vehicle.

8. Recuperative brake system for a vehicle having a control device (100) according to one of Claims 5 to 7.

## Revendications

1. Procédé d'utilisation d'un système de freinage à récupération pour véhicule, le procédé comportant des étapes suivantes :
commande d'un ou plusieurs moteurs, utilisables en génératrice, du système de freinage à récupération en tenant compte d'une première information (gₜₒₜₐₗ) concernant un couple total de freinage de consigne (Mₜₒₜₐₗ) demandé par le conducteur ou par un système automatique de contrôle de la vitesse et d'une deuxième information (gₘₐₓ) concernant le couple de freinage maximum possible en génératrice (Mₘₐₓ) qui peut être obtenu au moyen du ou des moteurs utilisables en génératrice, de telle sorte que si le couple total de freinage de consigne (Mₜₒₜₐₗ) peut être appliqué au moins en partie au moyen du couple de freinage maximum possible en génératrice (Mₘₐₓ), un couple de freinage par génératrice (M_{Gen}) plus petit ou égal au couple total de freinage de consigne (Mₜₒₜₐₗ) et plus petit ou égal au couple de freinage maximum possible en génératrice (Mₘₐₓ) est appliqué au moyen du ou des moteurs utilisables en génératrice sur une ou plusieurs roues et/ou sur un ou plusieurs essieux du véhicule, **caractérisé en ce que**
au moins lorsque le couple total de freinage de consigne (Mₜₒₜₐₗ) est situé au-dessus d'une valeur de seuil (g0) prédéterminée fixement ou pouvant être prédéterminée, même si le couple total de freinage de consigne (Mₜₒₜₐₗ) est plus petit ou égal au couple de freinage maximum possible en génératrice (Mₘₐₓ), une quantité de liquide de frein suffisant au moins pour qu'au moins un jeu d'air d'un ou plusieurs cylindres (26, 30) de frein de roue du système de freinage à récupération soit comblé est transférée par un actionneur hydraulique (42) dans le cylindre de frein de roue concerné.

2. Procédé selon la revendication 1, dans lequel le volume de consigne du liquide de frein transféré dans le ou les cylindres de frein de roue par le ou les actionneurs hydrauliques est défini en tenant compte au moins d'une valeur estimée et/ou déterminée d'un ou plusieurs volumes de reprise accrus d'au moins une partie du système hydraulique du système de freinage.

3. Procédé selon la revendication 2, dans lequel le volume de consigne du liquide de frein transféré dans le ou les cylindres de frein de roue par le ou les actionneurs hydrauliques est défini en tenant compte au moins d'une valeur estimée et/ou déterminée d'une ou plusieurs quantités d'air contenues dans au moins une partie du système hydraulique du système de freinage en tant que volume de reprise accru.

4. Procédé selon les revendications 1 ou 2, dans lequel le volume de consigne du liquide de frein transféré dans le ou les cylindre des frein de roue par le ou les actionneurs hydrauliques est défini en tenant compte au moins d'une valeur estimée et/ou déterminée du coefficient de frottement sur une ou plusieurs roues du véhicule.

5. Ensemble de commande (100) pour système de freinage à récupération pour véhicule, comprenant :
un dispositif de commande (102) conçu pour commander le ou les moteurs utilisables en génératrice en tenant compte d'au moins un signal (104) de prescription de freinage préparé concernant un couple total de freinage de consigne (Mₜₒₜₐₗ) demandé par le conducteur ou par un système automatique de contrôle de la vitesse et d'au moins un signal (106) d'information préparé concernant le couple de freinage maximum possible en génératrice (Mₘₐₓ) qui peut être obtenu au moyen du ou des moteurs utilisables en génératrice, de telle sorte que si le couple total de freinage de consigne (Mₜₒₜₐₗ) peut être appliqué au moins en partie au moyen du couple de freinage maximum possible en génératrice (Mₘₐₓ), un couple de freinage par génératrice (M_{Gen}) plus petit ou égal au couple total de freinage de consigne (Mₜₒₜₐₗ) et plus petit ou égal au couple de freinage maximum possible en génératrice (Mₘₐₓ) est appliqué au moyen du ou des moteurs utilisables en génératrice sur une ou plusieurs roues et/ou sur un ou plusieurs essieux du véhicule, **caractérisé en ce que**
au moins lorsque le couple total de freinage de consigne (Mₜₒₜₐₗ) est situé au-dessus d'une valeur de seuil (g0) prédéterminée fixement ou pouvant être prédéterminée, le dispositif de commande (102) est en outre conçu pour commander au moins un actionneur hydraulique (42) du système de freinage à récupération de telle sorte qu'une quantité de liquide de frein suffisant au moins pour qu'au moins un jeu d'air dans un ou plusieurs cylindres (26, 30) de frein de roue du système de freinage à récupération soit comblé puisse être transférée dans le cylindre de frein de roue concerné même si le couple total de freinage de consigne (Mₜₒₜₐₗ) est plus petit ou égal au couple de freinage maximum possible en génératrice (Mₘₐₓ).

6. Ensemble de commande (100) selon la revendication 5, dans lequel le dispositif de commande (102) est en outre conçu pour définir une grandeur de volume de consigne concernant un volume de consigne du liquide de frein transféré dans le ou les cylindre de frein de roue par le ou les actionneurs hydrauliques en tenant compte au moins d'une valeur estimée et/ou déterminée d'un ou plusieurs volumes de reprise accrus d'au moins une partie du système hydraulique du système de freinage.

7. Ensemble de commande (100) selon les revendications 5 ou 6, dans lequel le dispositif de commande (102) est en outre conçu pour définir le volume de consigne du liquide de frein transféré dans le ou les cylindre de frein de roue par le ou les actionneurs hydrauliques en tenant compte au moins d'une valeur estimée et/ou déterminée du coefficient de frottement sur une ou plusieurs roues du véhicule.

8. Système de freinage à récupération pour véhicule, le système présentant un ensemble de commande (100) selon l'une des revendications 5 à 7.
